(19) Europäisches Patentamt / European Patent Office / Office européen des brevets

(11) **EP 4 147 811 A1**

(12) **EUROPEAN PATENT APPLICATION**
published in accordance with Art. 153(4) EPC

(43) Date of publication:
**15.03.2023 Bulletin 2023/11**

(21) Application number: **21800664.1**

(22) Date of filing: **01.04.2021**

(51) International Patent Classification (IPC):
**B23B 35/00** (2006.01)   **C09J 201/00** (2006.01)
**C09J 7/10** (2018.01)   **C09J 7/24** (2018.01)
**C09J 7/25** (2018.01)   **C09J 7/38** (2018.01)

(52) Cooperative Patent Classification (CPC):
**B23B 35/00; C09J 7/10; C09J 7/24; C09J 7/25; C09J 7/38; C09J 201/00**

(86) International application number:
**PCT/JP2021/014216**

(87) International publication number:
**WO 2021/225051 (11.11.2021 Gazette 2021/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.05.2020 JP 2020082698**

(71) Applicant: **MITSUBISHI GAS CHEMICAL COMPANY, INC.**
**Chiyoda-ku**
**Tokyo 100-8324 (JP)**

(72) Inventors:
• **YOKOSUKA, Ryota**
  **Tokyo 125-8601 (JP)**
• **NONAKA, Hiroyuki**
  **Tokyo 125-8601 (JP)**
• **SOUTOME, Hiroki**
  **Kanagawa 230-0038 (JP)**

(74) Representative: **Hoffmann Eitle**
**Patent- und Rechtsanwälte PartmbB**
**Arabellastraße 30**
**81925 München (DE)**

(54) **SUPPORT TAPE FOR PROCESSING FIBER-REINFORCED COMPOSITE MATERIALS, AND MACHINING METHOD**

(57) An auxiliary tape for fiber-reinforced composite material processing, having a first adhesive layer having an adhesive force $A_1$ at 23°C to a fiber-reinforced composite material of 0.5 N/20 mm or more and an adhesive force $A_2$ at 90°C to the fiber-reinforced composite material of 0.1 N/20 mm or more.

[Figure 1]

**Description**

Technical Field

The present invention relates to an auxiliary tape for fiber-reinforced composite material processing and a machining method.

Background Art

Fiber-reinforced composite materials, one representative being fiber-reinforced plastics (FRP), have a high tensile strength, a high tensile elastic force and a small density compared with stainless steel (SUS) materials and thus have tended to be frequently used as outer plates for aircrafts or vehicles and the like in recent years. Here, the fiber-reinforced composite material refers to a plastic obtained by performing heat forming or heat-pressure forming on a prepreg obtained by impregnating a resin with a matrix resin or stacking two or more prepregs.

This fiber-reinforced composite material is fixed to structures using fastener elements such as bolts or rivets. Therefore, when the fiber-reinforced composite material is fixed to a structure such as an aircraft component, a machining process, in particular, a machining process for making a number of holes for passing fastener elements in the fiber-reinforced composite material becomes necessary.

In order to obtain high-quality holes in the machining process of fiber-reinforced plastics (FRP), several techniques have been already proposed. For example, a method by which the shape of a tool, for example, the curvature or tip angle of a rake face of a drill is changed stepwise is exemplified (for example, refer to Patent Literature 1).

Citation List

Patent Literature

Patent Literature 1: Japanese Patent Laid-Open No. 2012-210689

Summary of Invention

Technical Problem

The machining process of a fiber-reinforced composite material is normally performed using a drill. In such a machining process, a problem is that a part of fibers that form the fiber-reinforced composite material are not cut and remain as uncut parts around processed holes. In addition, another problem is that delamination between the stacked prepregs that form the fiber-reinforced composite material as described above (hereinafter, referred to as "delamination") occurs.

Regarding this point, improvement in the processability of fiber-reinforced composite materials (for example, CFRP), the machining process of which is difficult, has been studied from the viewpoint of tools as described in Patent Literature 1, but the effect cannot be said to be sufficient.

The present invention has been made in consideration of the above-described problems, and an objective of the present invention is to provide an auxiliary tape for fiber-reinforced composite material processing capable of reducing the uncut parts of fibers that occurs in the vicinity of a machined part in a machining process of a fiber-reinforced composite material and a machining method in which the auxiliary tape for fiber-reinforced composite material processing is used.

Solution to Problem

The present inventors have performed intensive studies in order to solve the above-described problems. As a result, the present inventors have found that the use of an auxiliary tape for fiber-reinforced composite material processing having an adjusted adhesive characteristic to fiber-reinforced composite materials makes it possible to solve the above-described problems and have completed the present invention.

That is, the present invention is as described below.

[1] An auxiliary tape for fiber-reinforced composite material processing, having a first adhesive layer having an adhesive force $A_1$ at 23°C to a fiber-reinforced composite material of 0.5 N/20 mm or more and an adhesive force $A_2$ at 90°C to the fiber-reinforced composite material of 0.1 N/20 mm or more.

[2] The auxiliary tape for fiber-reinforced composite material processing according to [1], in which a ratio ($A_2/A_1$) of

the adhesive force $A_2$ to the adhesive force $A_1$ is 0.05 or more.

[3] The auxiliary tape for fiber-reinforced composite material processing according to [1] or [2],

in which the first adhesive layer contains at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof.

[4] The auxiliary tape for fiber-reinforced composite material processing according to any one of [1] to [3], further having a base material,

in which the first adhesive layer is disposed on at least one main surface of the base material.

[5] The auxiliary tape for fiber-reinforced composite material processing according to [4] having

the first adhesive layer disposed on one main surface of the base material, and

a supporting material adhered to the other main surface of the base material through a second adhesive layer.

[6] The auxiliary tape for fiber-reinforced composite material processing according to [4] or [5],

in which the base material has a thickness of 10 to 150 $\mu$m.

[7] The auxiliary tape for fiber-reinforced composite material processing according to any one of [4] to [6],

in which the base material is a resin film.

[8] The auxiliary tape for fiber-reinforced composite material processing according to any one of [1] to [7],

in which the fiber-reinforced composite material contains a carbon fiber-reinforced plastic, a glass fiber-reinforced plastic, an aramid fiber-reinforced plastic or a Kevlar fiber-reinforced plastic.

[9] The auxiliary tape for fiber-reinforced composite material processing according to any one of [1] to [8]

in which the auxiliary tape is used in a state of being attached to a part of the fiber-reinforced composite material that becomes an exit for a machining tool in a process of machining the fiber-reinforced composite material with the machining tool.

[10] A machining method comprising:

a machining process step of machining a fiber-reinforced composite material with a machining tool to form a machined part having an exit and an entrance for the machining tool; and

an attachment step of attaching the first adhesive layer of the auxiliary tape for fiber-reinforced composite material processing according to any one of [1] to [9] in advance to a part of the fiber-reinforced composite material that becomes the exit for the machining tool before the machining process step.

[11] The machining method according to [10],

in which, in the machining process step, a hole is made by drilling using a drill as the machining tool.

[12] The machining method according to [11],

in which, in the machining process step, a feed rate of the drill is 0.01 to 1.0 mm/rev.

Advantageous Effect of Invention

According to the present invention, it is possible to provide an auxiliary tape for fiber-reinforced composite material processing capable of reducing the uncut parts of fibers that occurs in the vicinity of a machined part in a machining process of a fiber-reinforced composite material and a machining method in which the auxiliary tape for fiber-reinforced composite material processing is used.

Brief Description of Drawings

[Figure 1] Figure 1 shows a schematic view showing an aspect of a machining method of the present embodiment.

[Figure 2] Figure 2 shows a conceptual view of an uncut fiber percentage.

[Figure 3] Figure 3 shows a view showing a relationship between an adhesive force and the uncut fiber percentage.

[Figure 4] Figures 4 shows a conceptual view of an index $F_d$ value of delamination.

[Figure 5] Figures 5 shows a conceptual view showing a relationship between an adhesive force and the index $F_d$ value of delamination.

Description of Embodiments

Hereinafter, an embodiment of the present invention (hereinafter, referred to as "the present embodiment") will be described in detail, but the present invention is not limited thereto and can be modified in a variety of manners within the scope of the gist of the present invention.

[Auxiliary Tape for Fiber-Reinforced Composite Material Processing]

An auxiliary tape for fiber-reinforced composite material processing of the present embodiment (hereinafter, also simply referred to as "the auxiliary tape") has a first adhesive layer having an adhesive force $A_1$ at 23°C to a fiber-reinforced composite material of 0.5 N/20 mm or more and an adhesive force $A_2$ at 90°C to the fiber-reinforced composite material of 0.1 N/20 mm or more.

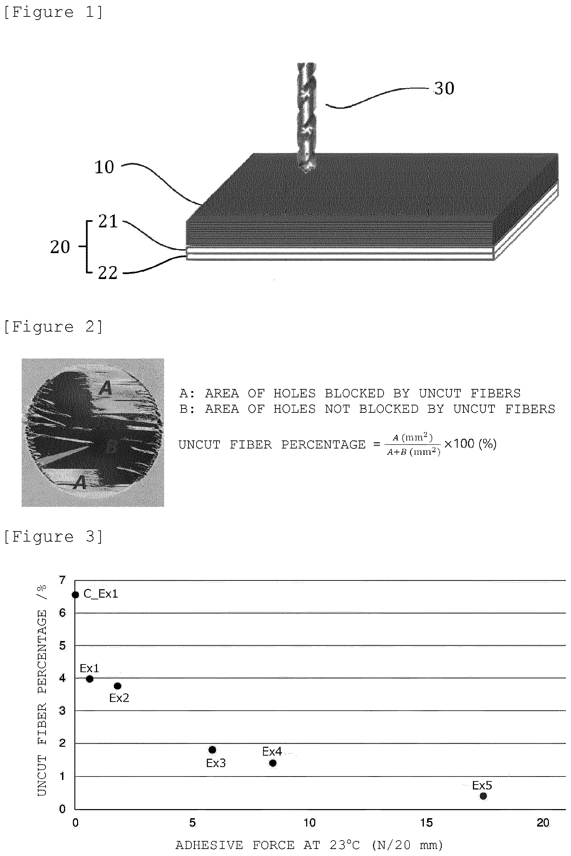

Figure 1 shows a schematic view representing an aspect of the auxiliary tape of the present embodiment. As shown in Figure 1, an auxiliary tape 2 of the present embodiment is a material that is used in the machining process of a fiber-reinforced composite material 1. More specifically, in the process of machining the fiber-reinforced composite material with a machining tool, the first adhesive layer 21 of the auxiliary tape 2 is attached to a part of the fiber-reinforced composite material 1 that becomes an exit for a machining tool 3, and the fiber-reinforced composite material 1 is processed using the machining tool 3 from the fiber-reinforced composite material 1 side. The auxiliary tape 2 may further have a base material 22 in addition to the first adhesive layer 21. In addition, the auxiliary tape 2 may further have a supporting material (not shown) adhered to a surface of the base material 22 on which the first adhesive layer 21 is not formed through a second adhesive layer (not shown).

When the tool tip begins to penetrate the lowest layer of the fiber-reinforced composite material, the fiber-reinforced composite material begins to tear in a direction parallel to fibers. When the tool gradually moves down, the fibers of the fiber-reinforced composite material are cut in the vicinities of the centers of holes and are cut in a direction perpendicular to the fibers. After that, as the tool further moves down, the holes are significantly pressed and widened, at this time, the fibers in a state of being cantilevered from the edges of the holes as fulcrums merely fall down in the rotation direction of the tool, are not cut and remain around the processed holes that become the exit for the machining tool (uncut parts of the fibers).

In contrast, in the present embodiment, the fibers falling into a cantilevered state are restrained by using the auxiliary tape exhibiting a predetermined adhesive force even during a machining process, which makes it possible to cleanly cut the fibers of the fiber-reinforced composite material along the edges of the holes. As a result, it is possible to suppress the generation of uncut parts of the fibers compared with conventional methods, high-quality processed holes can be obtained. Particularly, regarding drilling, drilling that is excellent in terms of productivity and qualities compared with the related art becomes possible. The reasons for the uncut parts of the fibers to be suppressed by the auxiliary tape of the present embodiment are not limited to the above description. Hereinafter, the configuration of the auxiliary tape of the present embodiment will be described in more detail.

[First Adhesive Layer]

When the machining tool machines the fiber-reinforced composite material, the vicinity of a processed part becomes hot due to friction between the machining tool and the fiber-reinforced composite material. Ordinarily, an adhesive component is softened by heating, and there is a tendency for the adhesive force to decrease. In contrast, in the auxiliary tape of the present embodiment, the first adhesive layer having certain adhesiveness even in such a relatively high temperature state is used, which makes it possible to restrain the fibers even around processed holes that become the exit for the machining tool and to suppress the uncut parts of the fibers. In the auxiliary tape of the present embodiment, the adhesive force $A_1$ at 23°C and the adhesive force $A_2$ at 90°C to the fiber-reinforced composite material are regulated from such a viewpoint.

More specifically, the adhesive force $A_1$ at 23°C of the first adhesive layer to the fiber-reinforced composite material is preferably 0.5 N/20 mm or more, preferably 1.0 N/20 mm or more, more preferably 3.0 N/20 mm or more and still more preferably 5.0 N/20 mm or more. The adhesive force $A_1$ of the first adhesive layer is preferably 30 N/20 mm or less, more preferably 25 N/20 mm or less, still more preferably 20 N/20 mm or less and far still more preferably 18 N/20 mm or less. When the adhesive force $A_1$ is 0.5 N/20 mm or more, the uncut parts of the fibers are further suppressed. When the adhesive force $A_1$ is 30 N/20 mm or less, it is possible to rapidly remove the auxiliary tape after the machining process step, and there is a tendency that the adhesive component remaining on the surface of the fiber-reinforced composite material is further suppressed.

The adhesive force $A_2$ at 90°C of the first adhesive layer to the fiber-reinforced composite material is 0.1 N/20 mm or more, preferably 0.2 N/20 mm or more, more preferably 0.3 N/20 mm or more, still more preferably 1.0 N/20 mm or more and far still more preferably 2.0 N/20 mm or more. The adhesive force $A_2$ of the first adhesive layer is preferably 25 N/20 mm or less, more preferably 20 N/20 mm or less, still more preferably 15 N/20 mm or less and far still more preferably 10 N/20 mm or less. When the adhesive force $A_2$ is 0.1 N/20 mm or more, the uncut parts of the fibers are further suppressed. When the adhesive force $A_2$ is 25 N/20 mm or less, it is possible to rapidly remove the auxiliary tape after the machining process step, and there is a tendency that the adhesive component remaining on the surface of the fiber-reinforced composite material is further suppressed.

Furthermore, the ratio ($A_2/A_1$) of the adhesive force $A_2$ to the adhesive force $A_1$ is preferably 0.05 or more, more preferably 0.10 or more, still more preferably 0.15 or more, far still more preferably 0.20 or more, even far still more preferably 0.25 or more and particularly preferably 0.30 or more. The ratio ($A_2/A_1$) is preferably 1.0 or less, more preferably 0.90 or less, still more preferably 0.80 or less, far still more preferably 0.70 or less and even far still more preferably 0.60 or less. When the ratio ($A_2/A_1$) is 0.05 or more, since the adhesive force $A_2$ is maintained even at high temperatures, there is a tendency that the uncut parts of the fibers are further suppressed. When the ratio ($A_2/A_1$) is 1.0 or less, there is a tendency that the removability of the adhesive component from the surface of the fiber-reinforced composite material further improves.

An adhesive force $A_3$ at 60°C of the first adhesive layer to the fiber-reinforced composite material is 0.20 N/20 mm or more, preferably 0.50 N/20 mm or more, more preferably 1.0 N/20 mm or more, still more preferably 3.0 N/20 mm or more and far still more preferably 4.0 N/20 mm or more. The adhesive force $A_3$ of the first adhesive layer is preferably 20 N/20 mm or less, more preferably 15 N/20 mm or less, still more preferably 10 N/20 mm or less and far still more preferably 7.5 N/20 mm or less. When the adhesive force $A_3$ is 0.20 N/20 mm or more, the uncut parts of the fibers are further suppressed. When the adhesive force $A_3$ is 20 N/20 mm or less, it is possible to rapidly remove the auxiliary tape after the machining process step, and there is a tendency that the adhesive component remaining on the surface of the fiber-reinforced composite material is further suppressed.

Furthermore, the ratio ($A_3/A_1$) of the adhesive force $A_3$ to the adhesive force $A_1$ is preferably 0.10 or more, more preferably 0.20 or more, still more preferably 0.30 or more, far still more preferably 0.40 or more and even far still more preferably 0.50 or more. The ratio ($A_3/A_1$) is preferably 1.0 or less, more preferably 0.90 or less, still more preferably 0.80 or less, far still more preferably 0.70 or less and even far still more preferably 0.60 or less. When the ratio ($A_3/A_1$) is 0.10 or more, since the adhesive force $A_3$ is maintained even at high temperatures, there is a tendency that the uncut parts of the fibers are further suppressed. When the ratio ($A_3/A_1$) is 1.0 or less, there is a tendency that the removability of the adhesive component from the surface of the fiber-reinforced composite material further improves.

An adhesive force $A_4$ at 120°C of the first adhesive layer to the fiber-reinforced composite material is 0.10 N/20 mm or more, preferably 0.30 N/20 mm or more, more preferably 1.0 N/20 mm or more, still more preferably 1.5 N/20 mm or more and far still more preferably 2.0 N/20 mm or more. The adhesive force $A_4$ of the first adhesive layer is preferably 15 N/20 mm or less, more preferably 10 N/20 mm or less, still more preferably 7.5 N/20 mm or less and far still more preferably 5.0 N/20 mm or less. When the adhesive force $A_4$ is 0.10 N/20 mm or more, the uncut parts of the fibers are further suppressed. When the adhesive force $A_4$ is 15 N/20 mm or less, it is possible to rapidly remove the auxiliary tape after the machining process step, and there is a tendency that the adhesive component remaining on the surface of the fiber-reinforced composite material is further suppressed.

Furthermore, the ratio ($A_4/A_1$) of the adhesive force $A_4$ to the adhesive force $A_1$ is preferably 0.10 or more, more preferably 0.15 or more, still more preferably 0.20 or more and far still more preferably 0.25 or more. The ratio ($A_4/A_1$) is preferably 1.0 or less, more preferably 0.90 or less, still more preferably 0.80 or less, far still more preferably 0.70 or less and even far still more preferably 0.60 or less. When the ratio ($A_4/A_1$) is 0.10 or more, since the adhesive force $A_4$ is maintained even at high temperatures, there is a tendency that the uncut parts of the fibers are further suppressed. When the ratio ($A_4/A_1$) is 1.0 or less, there is a tendency that the removability of the adhesive component from the surface of the fiber-reinforced composite material further improves.

The adhesive force $A_1$, the adhesive force $A_2$, the adhesive force $A_3$, the adhesive force $A_4$ and the ratios therebetween can be adjusted depending on the amount or type of the adhesive component that is used for the first adhesive layer. A method for measuring the adhesive force $A_1$, the adhesive force $A_2$, the adhesive force $A_3$ and the adhesive force $A_4$ is not particularly limited and can be measured in accordance with, for example, JIS Z 0237 (2009).

The configuration component of the first adhesive layer is not particularly limited, and examples thereof include thermoplastic resins and/or thermosetting resins. The thermoplastic resins are not particularly limited, and examples thereof include at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof. The thermosetting resins are not particularly limited, and examples thereof include resins such as a phenolic resin, an epoxy resin, a melamine resin, a urea resin, an unsaturated polyester resin, an alkyd resin, polyurethane, thermosetting polyimide and a cyanate resin.

Among these, the configuration component of the first adhesive layer is preferably a thermoplastic resin, more preferably at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof, more preferably an acrylic polymer or a rubber-based polymer and still more preferably an acrylic polymer. When such a thermoplastic resin is used, the adhesive force $A_1$, the adhesive force $A_2$ and the ratio therebetween are adjusted to the above-described ranges, and there is a tendency that the uncut parts of the fibers are further suppressed.

Generally, adhesive components can be roughly classified into an adhesive component that does not cause any chemical reaction in an adhesion process (hereinafter, also referred to as "FGA"), an adhesive component that causes a polymerization reaction (hereinafter, also referred to as "SGA") and an adhesive component that cures by energy irradiation such as ultraviolet rays (hereinafter, also referred to as "TGA"). The auxiliary tape of the present embodiment is removed from the fiber-reinforced composite material after the machining process step. Therefore, the auxiliary tape of the present embodiment does not need to strongly adhere to the fiber-reinforced composite material and, instead, desirably can be rapidly removed. From such a viewpoint, the configuration component that is used for the first adhesive layer of the present embodiment is preferably the adhesive component (FGA) that does not cause any chemical reaction in the adhesion process.

As an example, the acrylic polymer, which corresponds to FGA, is not particularly limited, and examples thereof include copolymers of alkyl ester acrylate and a functional group-containing monomer such as a carboxyl group-containing acrylate, a hydroxy group-containing acrylate, an amino group-containing acrylate or a glycidyl group-containing acrylate. The adhesive force $A_1$, the adhesive force $A_2$ and the ratio therebetween can be adjusted by appropriately adjusting the compositions of these monomers.

The thickness of the first adhesive layer is preferably 1 to 1000 $\mu$m, more preferably 5 to 500 $\mu$m, still more preferably 10 to 100 $\mu$m and far still more preferably 15 to 60 $\mu$m. When the thickness of the adhesive layer is within the above-described range, the uncut parts of the fibers are further suppressed, and there is a tendency that the adhesive property of the adhesive component to the surface of the fiber-reinforced composite material and the removability of the adhesive component from the surface of the fiber-reinforced composite material further improve.

[Base Material]

The auxiliary tape of the present embodiment may further have a base material. More specifically, the auxiliary tape of the present embodiment may have a base material and the first adhesive layer disposed on at least one main surface of the base material. When the auxiliary tape has the base material, there is a tendency that the handleability as tape further improves.

The base material is not particularly limited, and examples thereof include a polyolefin-based film such as polyethylene or polypropylene, a polyester-based film such as polyethylene terephthalate or polyethylene naphthalate and a resin film such as a vinyl chloride-based film, a polystyrene-based film or an acrylic film. These resin films are excellent in terms of formability and are suitable as the base material that forms the first adhesive layer.

The thickness of the base material is preferably 10 to 150 $\mu$m, more preferably 10 to 125 $\mu$m and still more preferably 10 to 100 $\mu$m.

[Supporting Material]

The auxiliary tape of the present embodiment may further have a supporting material. In this case, it is possible to provide a supporting material adhered to a main surface of the base material on which the first adhesive layer is not formed through a second adhesive layer. When such a supporting material is provided, it is possible to impart mechanical characteristics such as stiffness to the auxiliary tape, not only the handleability of the auxiliary tape further improve, but also the property of the auxiliary tape restraining the fibers also further improves, and thus there is a tendency that the uncut parts of the fibers that are generated around the processed holes are further suppressed.

In the present embodiment, the base material refers to a film material that forms the first adhesive layer and is not a member that is mainly intended to impart mechanical characteristics such as stiffness to the auxiliary tape, whereas the supporting material refers to a sheet material that is mainly intended to impart mechanical characteristics such as stiffness to the auxiliary tape. While not particularly limited, for example, the base material and the supporting material can be differentiated with the thickness due to the above-described difference in objective.

The thickness of the supporting material is preferably 100 to 10000 $\mu$m, more preferably 200 to 5000 $\mu$m and still more preferably 300 to 2500 $\mu$m. The use of a supporting material having such a thickness further improves the mechanical characteristics of the auxiliary tape, further improves the handleability as tape, and further improves the property of the auxiliary tape restraining the fibers, and thus there is a tendency that the uncut parts of the fibers that are generated around the processed holes are further suppressed.

The supporting material is not particularly limited, and examples thereof include a polyolefin-based sheet such as polyethylene or polypropylene, a polyester-based sheet such as polyethylene terephthalate or polyethylene naphthalate and a resin sheet such as a vinyl chloride-based sheet, a polystyrene-based sheet or an acrylic sheet. For the convenience, the base material will be referred to as the film, and the supporting material will be referred to as the sheet.

[Second Adhesive Layer]

The second adhesive layer is a layer that causes the supporting material and the base material to adhere to each other. The configuration component of such a second adhesive layer is not particularly limited, and examples thereof include thermoplastic resins and/or thermosetting resins. The thermoplastic resins are not particularly limited, and examples thereof include at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof. The thermosetting resins are not particularly limited, and examples thereof include resins such as a phenolic resin, an epoxy resin, a melamine resin, a urea resin, an unsaturated polyester resin, an alkyd resin, polyurethane, thermosetting polyimide and a cyanate resin. The configuration components of the first adhesive layer and the second adhesive layer may be the same as or different from each other.

The thickness of the second adhesive layer is preferably 1 to 1000 $\mu$m, more preferably 5 to 500 $\mu$m and still more preferably 10 to 100 $\mu$m.

[Other Configurations]

The overall thickness of the auxiliary tape of the present embodiment is preferably 10 to 7500 $\mu$m, more preferably 15 to 2500 $\mu$m and still more preferably 20 to 1500 $\mu$m. The auxiliary tape of the present embodiment preferably does not have, for example, any metal layers as the base material, the supporting material or other members. The auxiliary tape of the present embodiment preferably does not contain any inorganic components such as carbon, molybdenum sulfide and tungsten sulfide as the first adhesive layer, the second adhesive layer, the base material, the supporting material or other members. When the auxiliary material does not contain any metal layers or inorganic components as described above, it is possible to suppress the wear of the blade edges of machining tools.

In the above description, an aspect in which the base material and the supporting material are provided has been described, but the auxiliary tape of the present embodiment may have a supporting material instead of the base material. In this case, the first adhesive layer is formed on the main surface of the supporting material, and the auxiliary tape of the present embodiment may be an aspect in which neither the base material nor the second adhesive layer is provided.

[Method for Manufacturing Auxiliary Tape]

A method for manufacturing the auxiliary tape of the present embodiment is not particularly limited, and examples thereof include a method having a step of forming the first adhesive layer on the base material. A method for forming the first adhesive layer is not particularly limited, and it is possible to use a method well known as a method for manufacturing a so-called adhesive tape, for example, a method in which a solution containing an adhesive component is applied onto a base material and dried or a method in which a solution containing a monomer and a polymerization initiator is applied onto a base material and heated to make a polymerization reaction proceed, thereby forming a first adhesive layer on the base material.

In a case where the supporting material is provided, a step of bonding the surface of the base material on which the first adhesive layer is not formed and the supporting material through the second adhesive layer may be performed. In this case, the second adhesive layer may be formed on the surface of the base material on which the first adhesive layer is not formed, may be formed on the surface of the supporting material or may be formed on both surfaces.

[Machining Method]

A machining method of the present embodiment has a machining process step of machining a fiber-reinforced composite material with a machining tool to form a machined part having the exit and the entrance for the machining tool and has, before the machining process step, an attachment step of attaching the first adhesive layer of the auxiliary tape in advance to a part of the fiber-reinforced composite material that becomes the exit for the machining tool. In this case, the auxiliary tape 2 comes into contact with the machining tool 3 that has penetrated the fiber-reinforced composite material 1.

When the auxiliary tape of the present embodiment is disposed on the part that becomes the exit for the machining tool and used, in the machining process of the fiber-reinforced composite material, it is possible to suppress the uncut parts of the fibers that are generated in the vicinity of the machined part. This makes it possible to obtain a higher-quality machined part than machined parts obtained by conventional methods.

Here, "the machining process" is not particularly limited as long as the process is a process for machining the fiber-reinforced composite material, and examples thereof include drilling, grooving, turning, and cutting. Among these, the auxiliary tape of the present embodiment is suitable for drilling in which a drill is used.

"The machined part" refers to a space formed by removing a part of the fiber-reinforced composite material with the machining tool. "The vicinity of the machined part" is a concept indicating the machined part and the vicinity thereof and is a concept including a part of the fiber-reinforced composite material with which the machining tool has come into contact (the inner wall and the outer edge of the machined part) and a vicinity part that is affected by machining. For example, in a case where a hole (machined part) has been formed by drilling, the vicinity of the machined part includes the edge of the entrance and the edge of the exit of the hole. In a case where a groove has been formed by grooving, the vicinity of the machined part includes the edge of the groove. In a case where the surface of the fiber-reinforced composite material has been machined by turning, a part of the fiber-reinforced composite material with which the machining tool has come into contact is included.

Hereinafter, each step will be described in detail.

(Attachment Step)

The attachment step is a step of attaching the first adhesive layer of the auxiliary tape in advance to a part of the fiber-reinforced composite material that becomes the exit for the machining tool before the machining process step. The attachment site of the auxiliary tape on the fiber-reinforced composite material is a part that becomes the exit for the machining tool in advance. This makes it possible to reduce the uncut parts of the fibers that are generated in the vicinity of the exit for the machining tool.

An attachment method is not particularly limited, and examples thereof include a method involving removing release paper bonded to the first adhesive layer as necessary and bonding the first adhesive layer and the surface of the fiber-reinforced composite material together.

(Machining Process Step)

The machining process step is a step of machining the fiber-reinforced composite material with the machining tool to form a machined part having the exit and the entrance for the machining tool. When the auxiliary tape exhibiting a predetermined adhesive force even during the machining process is used as described above, the fibers of the fiber-reinforced composite material restrain the fibers falling into a state of being cantilevered from the edges of the holes as fulcrums, which makes it possible to cleanly cut the fibers of the fiber-reinforced composite material along the edges of the holes. This action principle is true throughout the entire machining tool.

A machining method is not particularly limited, and examples thereof include well-known conventional methods such as drilling, grooving, turning and cutting. The types of machining tools that are used in these machining processes are also not particularly limited, and it is possible to appropriately use a well-known machining tool suitable for the machining method.

Among those, in the machining process step, holes are preferably made by drilling using a drill as the machining tool. The diameter, material and shape of the drill to be used and the presence or absence of a surface coating are not particularly limited.

The diameter of the drill can be selected as appropriate depending on the use and is ordinarily 1 to 30 mm. Particularly, for the drilling use of base materials for aircrafts, the diameter is preferably 2 to 7 mm. From the viewpoint of forming larger processed holes, the diameter of the drill is preferably 3 mm or more, more preferably 5 mm or more, still more preferably 6 mm or more, far still more preferably 10 mm or more, even far still more preferably 12.5 mm or more and particularly preferably 15 mm or more. As the diameter of the drill becomes larger, it is more likely for the uncut parts of the fibers to be generated in the vicinity of the machined part, and thus the present invention is useful.

The material of the drill is preferably high-speed steel or cemented carbide that is made by sintering the powder of a hard metal carbide. Such cemented carbide is not particularly limited, and examples thereof include metals obtained by sintering a mixture of tungsten carbide and cobalt, which is a binding agent. To the cemented carbide, titanium carbide, tantalum carbide or the like may be added in order to further improve material characteristics depending on the intended use.

The shape of the drill can be selected as appropriate depending on the conditions of the drilling, the type or shape of the fiber-reinforced composite material or the like. The shape of the drill is not particularly limited, and examples thereof include the tip angle of the drill, the twist angle of a groove, and the number of cutting edges.

The surface coating of the drill can be selected as appropriate depending on the conditions of the drilling, the type or shape of the fiber-reinforced composite material or the like. Examples of a preferable type of surface coating include a diamond coating, a diamond-like coating, and a ceramic coating.

The feed rate of the drill is preferably 0.01 to 1.0 mm/rev, more preferably 0.05 to 0.8 mm/rev and still more preferably 0.1 to 0.6 mm/rev. When the feed rate of the drill is 0.01 mm/rev or faster, the process rate improves, but it is more likely for the uncut parts of the fibers to be generated, and thus the present invention becomes particularly useful.

In the machining process step, it is possible to use a technique in an ordinary machining process. For example, at the time of performing the machining process, the machining process may be performed while cooling a site under the machining process and/or the machining tool using a gas or a liquid. Examples of a method for cooling the site under the machining process and/or the machining tool using a gas include a method in which a compressed gas is supplied to the site under the machining process and/or the machining tool and a method in which a gas is supplied to the machining process site and/or the machining tool from the surrounding by suctioning gases in the vicinities of the site under the machining process and/or the machining tool.

Processes other than hold formation can also be performed in the same manner as described above. The tool and the method for performing the machining process are not particularly limited. Specific examples thereof include drilling in which a through hole or a non-through hole is formed with, instead of the drill, a router, a milling cutter, an end mill, a side cutter or the like, and processes in which the fiber-reinforced composite material is cut with a router, a pipe cutter, an end mill, a metal saw or the like. On the blade edge of the machining tool, a coating film of titanium, diamond, diamond-like carbon or the like may be formed in order to suppress the wear by increasing the hardness.

(Removal Step)

The machining method of the present embodiment may have a removal step of removing the auxiliary tape from the fiber-reinforced composite material after the machining process step.

[Fiber-Reinforced Composite Material]

The auxiliary tape of the present embodiment is used against fiber-reinforced composite materials composed of a matrix resin and reinforcement fibers.

The matrix resin is not particularly limited, and examples thereof include thermosetting resins such as an epoxy resin, a phenolic resin, a cyanate resin, a vinyl ester resin and an unsaturated polyester resin; and thermoplastic resins such as an acrylonitrile-butadienestyrene (ABS) resin, a polyamide (PA) resin, a polypropylene (PP) resin, a polycarbonate (PC) resin, a methyl methacrylate resin, polyethylene, acrylics and a polyester resin.

The reinforcement fiber is not particularly limited, and examples thereof include a glass fiber, a carbon fiber and an aramid fiber. The form of the reinforcement fiber is not particularly limited, and examples thereof include a filament, a toe, a cloth, a blade, a chop, a milled fiber, a felt mat, paper, and a prepreg.

Specific examples of such a fiber-reinforced composite material are not particularly limited, and include fiber-reinforced plastics (FRP) such as a carbon fiber-reinforced plastic (CFRP), a glass fiber-reinforced plastic (GFRP), an aramid fiber-reinforced plastic (AFRP) and a Kevlar fiber-reinforced plastic (KFRP). Among these, a carbon fiber-reinforced plastic (CFRP) having a relatively high tensile strength, a relatively high tensile elastic force and a relatively small density is preferable.

The fiber-reinforced composite materials may additionally contain an inorganic filler, an organic filler or the like as necessary. The fiber-reinforced plastics are a concept containing reinforcement fibers and a thermosetting resin and/or a thermoplastic resin, and, among these, fiber-reinforced composite materials containing reinforcement fibers and a thermoplastic resin are also referred to as fiber reinforced thermoplastics (FRTP). For example, fiber-reinforced composite materials containing carbon fibers and a thermoplastic resin are referred to as carbon fiber reinforced thermoplastics (CFRTP).

Examples

Hereinafter, the present invention will be described more specifically using examples and comparative examples. The present invention is not limited to the following examples by any means.

Table 1 shows a workpiece material (a material in which holes were formed and processed) used, a drill bit used for hole formation, a hole-forming instrument and the specifications of a device used for evaluation in each of the examples and the comparative examples.

[Table 1]

| Classification | Title | Trade name/model No. | Manufacturer | Note |
|---|---|---|---|---|
| Workpiece material | CFRP | Carbon fiber-reinforced plastic plate | TIP Composite Co., Ltd. | Thickness: 10 mm, Quasiisotropic laminated aircraft use-equivalent material (UD material) |
| | GFRP | Glass fiber-reinforced plastic plate | - | Thickness: 10 mm, Quasiisotropic laminated material (UD material) |
| Drill bit | Cemented carbide drill | RG-GDN | OSG Corporation | Diameter: 6.0 mm$\phi$<br>Tip angle: 120°<br>Twist angle: 40°<br>No solid drill, no coating |
| | High-speed steel drill | SD 6.0 | Saito Twist Drill Co., Ltd. | Diameter: 6.0 mm$\phi$<br>Tip angle: 118°<br>Twist angle: 30°<br>No high-speed steel drill, no coating |
| Drilling instrument | Machining center | VCN-535C | Yamazaki Mazak Corporation | - |
| Evaluation device | 3D measurement system | VR-5200 | Keyence Corporation | - |
| | Table-top type universal precision tester | AG-Xplus | Shimadzu Corporation | - |
| | Heating furnace | TCE-N300 | Shimadzu Corporation | - |

[Synthesis Example 1]

n-Butyl acrylate, acrylic acid and 2-hydroxyethyl acrylate were charged into a reactor, and a polymerization reaction was performed in a mixed solution of toluene/ethyl acetate using azobisisobutyronitrile as a polymerization initiator, thereby obtaining an acrylic polymer. 30 Parts of a terpene-phenolic resin and 2 parts of an isocyanate-based crosslinking agent were added to 100 parts of the acrylic polymer and stirred until the components became homogeneous, thereby obtaining an acrylic adhesive solution.

[Example 1]

The acrylic adhesive solution obtained in Synthesis Example 1 was applied onto a polyethylene terephthalate film (thickness: 40 $\mu$m), which was a base material, and dried to form a 10 $\mu$m-thick first adhesive layer. Subsequently, the acrylic adhesive solution obtained in Synthesis Example 1 was applied to the other surface of the polyethylene terephthalate film (a surface opposite to the surface on which the first adhesive layer is formed) and dried to form a 10 $\mu$m-thick second adhesive layer, thereby obtaining an auxiliary tape.

The surface of the first adhesive layer of the auxiliary tape obtained as described above was bonded to a part of the workpiece material that was to become the exit for a machining tool (drill bit) (exit part), and both were pressure-bonded by a method in which a 1 kg roller was made to reciprocate twice and left to stand at 23°C for 15 hours. After the auxiliary tape and the workpiece material were left to stand, the adhesive force (N/20 mm) was measured in accordance with JIS Z 0237 (2009) using a table-top type universal precision tester at a tensile rate of 300 mm/min and a tensile angle of 90° under each temperature condition. The adhesive force was measured three times under one temperature condition, and the average value thereof was recorded as the adhesive force.

After that, an auxiliary tape and the workpiece material were fixed in a drilling instrument using a jig. In addition, drilling was performed using the drill bit from the surface of the workpiece material to which an auxiliary tape was not bonded to the surface to which an auxiliary tape was bonded to form 80 holes. A machining process with the drill bit (drilling) was performed under conditions shown in Table 2. The evaluation results of uncut fibers (uncut parts of the fibers) and delamination (fiber delamination) near a machined part on the drill bit exit side were shown in Table 2.

[Examples 2 to 5 and 8 and 9]

A variety of acrylic adhesive solutions were prepared by changing the monomer compositional ratio in Synthesis Example 1, and auxiliary tapes of Examples 2 to 5 and 8 and 9 were obtained in the same manner as in Example 1. As in Example 1, the adhesive forces of the obtained auxiliary tapes were measured, drilling was performed under conditions shown in Table 2, and a variety of evaluations were performed.

[Example 6]

An auxiliary tape was obtained in the same manner as in Example 5 except that the second adhesive layer was not formed. In addition, as in Example 1, the adhesive force of the obtained auxiliary tape was measured, drilling was performed under conditions shown in Table 2, and a variety of evaluations were performed.

[Example 7]

An auxiliary tape was obtained by forming, instead of the first adhesive layer for which the acrylic adhesive solution was used, an adhesive layer of a rubber-based double-sided tape (VR-5300, manufactured by Nitto Denko Corporation) on a polyethylene terephthalate film (60 $\mu$m). As in Example 1, the adhesive forces of the obtained auxiliary tapes were measured, drilling was performed under conditions shown in Table 2, and a variety of evaluations were performed.

[Comparative Examples 1 to 3]

The workpiece materials were fixed to the drilling instrument with the jig in a state where no auxiliary tape was bonded to the workpiece material. In addition, as in Example 1, drilling was performed under conditions shown in Table 2, and a variety of evaluations were performed.

[Comparative Example 4]

No adhesive layer was provided, a polyethylene terephthalate film (thickness: 50 $\mu$m) was put on a part of the workpiece material that was to become the exit for the machining tool (drill bit) (exit part) and fixed to the drilling instrument with the jig. In addition, as in Example 1, drilling was performed under conditions shown in Table 2, and a variety of evaluations were performed.

[Evaluation: Uncut Fiber]

In the examples and the comparative examples, the drill bit exit side of each through hole after the process was measured using a wide-area 3D measurement system (VR-5200, manufactured by Keyence Corporation), and the uncut fiber cross-sectional area in the vicinity of the processed hole on the drill bit exit side was calculated from the measured data using analysis software. The cross-sectional area of all of the processed holes was also calculated, and the percentage (%) of the uncut fiber cross-sectional area in the vicinity of the processed hole with respect to the cross-sectional area of all of the processed holes was also calculated. The drill bit exit sides were measured from the first hole to the 80th hole every 10 holes, and the results were shown in Table 2 as individual average values. The definition of the uncut fiber percentage will be described below, and a conceptual view thereof is shown in Figure 2. A view showing the relationship between the adhesive force and the uncut fiber percentage is shown in Figure 3. In Figure 3, Ex indicates the examples, and C_Ex indicates the comparative examples.

$$\text{Undercut fiber percentage (\%) = uncut fiber area/hole area} \times 100$$

Uncut fiber area (mm$^2$): Area of holes blocked by uncut fibers
Hole area (mm$^2$): Area of holes with assumption that there are no uncut fibers

[Evaluation: Delamination]

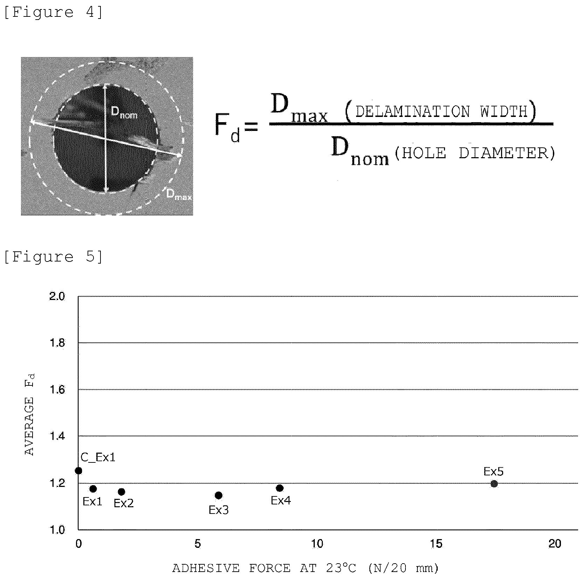

In Example and Comparative Example, the drill bit exit side of each through hole after the process was measured using a wide-area 3D measurement system (VR-5200, manufactured by Keyence Corporation), and the maximum length of delamination in the vicinity of the processed hole on the drill bit exit side was measured from the measured data using analysis software. At this time, when the diameter of the processed hole is indicated by $D_{nom}$, the value of the diameter of the processed hole + the maximum length of delamination $\times$ 2 was indicated by $D_{max}$, and the $F_d$ value was calculated from the following formula. The drill bit exit sides were measured from the first hole to the 80th hole every 10 holes, and the results were shown in Table 2 as individual average values. A calculation conceptual view of the $F_d$ value is shown in Figure 4. A view showing the relationship between the adhesive force and the $F_d$ value of delamination is shown in Figure 5. In Figure 5, Ex indicates the examples, and C_Ex indicates the comparative examples.

$$F_d \ \text{value} = D_{max}/D_{nom}$$

[Evaluation: Removability]

After the first adhesive layer was removed, the residue of the adhesive component on the surface of the workpiece material was visually checked, and the removability was evaluated by marking "X" in a case where the residue was recognized and "○" in a case where the residue was not recognized.

[Table 2]

| | First adhesive layer | | Base material [thickness μm] | Adhesive force [N/20mm] | | | | | | | Workpiece material | Drill bit | Process conditions | | Removability | Uncut fiber percentage [80-hole process average, %] | Delamination [80-hole process average, $F_d$] |
|---|---|---|---|---|---|---|---|---|---|---|---|---|---|---|---|---|---|
| | Type | Thickness [μm] | | $A_1$ (23°C) | $A_2$ (90°C) | $A_3$ (60°C) | $A_4$ (120°C) | $A_2/A_1$ | $A_3/A_1$ | $A_4/A_1$ | | | Machining rate [m/min] | Feed rate [mm/rev] | | | |
| Comparative Example 1 | - | - | - | - | - | - | - | - | - | - | CFRP | RG-GDN | 100 | 0.15 | - | 6.6 | 1.26 |
| Comparative Example 2 | - | - | - | - | - | - | - | - | - | - | CFRP | RG-GDN | 100 | 0.30 | - | 9.0 | 1.75 |
| Comparative Example 3 | < | < | < | < | - | - | - | - | - | - | GFRP | SD 6.0 | 70 | 0.05 | - | 42 | 1.33 |
| Comparative Example 4 | - | - | PET (50 μm) | - | - | - | - | - | - | - | CFRP | RG-GDN | 100 | 0.15 | - | 7.2 | 1.22 |
| Example 1 | Acrylic | 10 μm | PET (40 μm) | 0.61 | 0.14 | 0.23 | 0.10 | 0.23 | 0.38 | 0.16 | CFRP | RG-GDN | 100 | 0.15 | ○ | 40 | 1.17 |
| Example 2 | | 10 μm | PET (12 μm) | 1.8 | 0.25 | 0.54 | 0.29 | 0.14 | 0.30 | 0.16 | CFRP | RG-GDN | 100 | 0.15 | ○ | 3.8 | 1.16 |
| Example 3 | | 25 μm | PET (25 μm) | 5.9 | 0.57 | - | - | 0.10 | - | - | CFRP | RG-GDN | 100 | 0.15 | ○ | 1.7 | 1.15 |
| Example 4 | | 25 μm | PET (40 μm) | 8.5 | 2.1 | 4.9 | 1.9 | 0.25 | 0.58 | 0.22 | CFRP | RG-GDN | 100 | 0.15 | ○ | 1.4 | 1.18 |
| Example 5 | | 40 μm | PET (40 μm) | 17.5 | 7.0 | 9.7 | 4.1 | 0.40 | 0.55 | 0.23 | CFRP | RG-GDN | 100 | 0.15 | × | 0.40 | 120 |
| Example 6 | | 40 μm | PET (40 μm) | 17.5 | 7.0 | 9.7 | 4.1 | 0.40 | 0.55 | 0.23 | CFRP | RG-GDN | 100 | 0.15 | × | 0.68 | 1.22 |
| Example 7 | Rubber-based | 40 μm | PET (60 μm) | 10.2 | 6.2 | - | - | 0.31 | - | - | CFRP | RG-GDN | 100 | 0.15 | × | 0.77 | 1.17 |

| | First adhesive layer | | | Adhesive force [N/20mm] | | | | | | | Work-piece ma-terial | Drill bit | Process conditions | | Removabili-ty | Uncut fiber percent-age [80-hole proc-ess aver-age, %] | Delamina-tion [80-hole process av-erage, $F_d$] |
| | Type | Thick-ness [$\mu$m] | Base ma-terial [thick-ness $\mu$m] | $A_1$ (23°C) | $A_2$ (90°C) | $A_3$ (60°C) | $A_4$ (120°C) | $A_2/A_1$ | $A_3/A_1$ | $A_4/A_1$ | | | Machin-ing rate [m/min] | Feed rate [mm/rev] | | | |
|---|---|---|---|---|---|---|---|---|---|---|---|---|---|---|---|---|---|
| Example 8 | Acrylic | 40 $\mu$m | PET (40 $\mu$m) | 17.5 | 7.0 | 9.7 | 4.1 | 0.40 | 0.55 | 0.23 | CFRP | RG-GDN | 100 | 0.30 | × | 0.71 | 1.09 |
| Example 9 | Acrylic | 40 $\mu$m | PET (40 $\mu$m) | 17.5 | 7.0 | 9.7 | 4.1 | 0.40 | 0.55 | 0.23 | GFRP | SD 6.0 | 70 | 0.05 | × | 22 | 1.15 |

EP 4 147 811 A1

Industrial Applicability

The auxiliary tape for fiber-reinforced composite material processing of the present invention is industrially applicable as an auxiliary tape that is used for the machining process of fiber-reinforced composite materials.

**Claims**

1.  An auxiliary tape for fiber-reinforced composite material processing, comprising:
    a first adhesive layer having an adhesive force $A_1$ at 23°C to a fiber-reinforced composite material of 0.5 N/20 mm or more and an adhesive force $A_2$ at 90°C to the fiber-reinforced composite material of 0.1 N/20 mm or more.

2.  The auxiliary tape for the fiber-reinforced composite material processing according to claim 1,
    wherein a ratio ($A_2/A_1$) of the adhesive force $A_2$ to the adhesive force $A_1$ is 0.05 or more.

3.  The auxiliary tape for the fiber-reinforced composite material processing according to claim 1 or 2,
    wherein the first adhesive layer comprises at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof.

4.  The auxiliary tape for the fiber-reinforced composite material processing according to any one of claims 1 to 3,
    further comprising a base material,
    wherein the first adhesive layer is disposed on at least one main surface of the base material.

5.  The auxiliary tape for the fiber-reinforced composite material processing according to claim 4, comprising:

    the first adhesive layer disposed on one main surface of the base material; and
    a supporting material adhered to the other main surface of the base material through a second adhesive layer.

6.  The auxiliary tape for the fiber-reinforced composite material processing according to claim 4 or 5,
    wherein the base material has a thickness of 10 to 150 $\mu$m.

7.  The auxiliary tape for the fiber-reinforced composite material processing according to any one of claims 4 to 6,
    wherein the base material is a resin film.

8.  The auxiliary tape for the fiber-reinforced composite material processing according to any one of claims 1 to 7,
    wherein the fiber-reinforced composite material comprises a carbon fiber-reinforced plastic, a glass fiber-reinforced plastic, an aramid fiber-reinforced plastic or a Kevlar fiber-reinforced plastic.

9.  The auxiliary tape for the fiber-reinforced composite material processing according to any one of claims 1 to 8,
    wherein the auxiliary tape is used in a state of being attached to a part of the fiber-reinforced composite material that becomes an exit for a machining tool in a process of machining the fiber-reinforced composite material with the machining tool.

10. A machining method comprising:

    a machining process step of machining a fiber-reinforced composite material with a machining tool to form a machined part having an exit and an entrance for the machining tool; and
    an attachment step of attaching the first adhesive layer of the auxiliary tape for the fiber-reinforced composite material processing according to any one of claims 1 to 9 in advance to a part of the fiber-reinforced composite material that becomes the exit for the machining tool before the machining process step.

11. The machining method according to claim 10,
    wherein, in the machining process step, a hole is made by drilling using a drill as the machining tool.

12. The machining method according to claim 11,
    wherein, in the machining process step, a feed rate of the drill is 0.01 to 1.0 mm/rev.

[Figure 1]

[Figure 2]

A: AREA OF HOLES BLOCKED BY UNCUT FIBERS
B: AREA OF HOLES NOT BLOCKED BY UNCUT FIBERS

$$\text{UNCUT FIBER PERCENTAGE} = \frac{A\ (\text{mm}^2)}{A+B\ (\text{mm}^2)} \times 100\ (\%)$$

[Figure 3]

[Figure 4]

$$F_d = \frac{D_{max}\ (\text{DELAMINATION WIDTH})}{D_{nom}\ (\text{HOLE DIAMETER})}$$

[Figure 5]

## INTERNATIONAL SEARCH REPORT

| International application No. |
|---|
| PCT/JP2021/014216 |

A. CLASSIFICATION OF SUBJECT MATTER
Int. Cl. B23B35/00(2006.01)i, C09J201/00(2006.01)i, C09J7/10(2018.01)i, C09J7/24(2018.01)i, C09J7/25(2018.01)i, C09J7/38(2018.01)i
FI: C09J7/38, B23B35/00, C09J7/10, C09J7/24, C09J7/25, C09J201/00
According to International Patent Classification (IPC) or to both national classification and IPC

B. FIELDS SEARCHED

Minimum documentation searched (classification system followed by classification symbols)
Int. Cl. B23B35/00, C09J201/00, C09J7/10, C09J7/24, C09J7/25, C09J7/38

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
JSTPlus/JMEDPlus/JST7580 (JDreamIII);CAplus/REGISTRY (STN); Science Direct; Japio-GPG/FX

C. DOCUMENTS CONSIDERED TO BE RELEVANT

| Category* | Citation of document, with indication, where appropriate, of the relevant passages | Relevant to claim No. |
|---|---|---|
| X | WO 2017/022822 A1 (MITSUBISHI GAS CHEMICAL CO., INC.) 09 February 2017, claims 1, 13-15, paragraphs [0064], [0065], examples, tables 23-25, fig. 2 | 1-12 |
| A | WO 2016/174713 A1 (TERAOKA SEISAKUSHO CO., LTD.) 03 November 2016, examples | 1-12 |
| A | JP 2017-127970 A (MITSUBISHI GAS CHEMICAL CO., INC.) 27 July 2017, examples | 1-12 |
| A | JP 2015-232108 A (NITTO DENKO CORP.) 24 December 2015, examples | 1-12 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.06.2021 | 22.06.2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/014216 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2012-45795 A (DAINIPPON PRINTING CO., LTD.) 08 March 2012, examples | 1-12 |
| A | JP 2010-106193 A (TOKYO INSTITUTE OF TECHNOLOGY) 13 May 2010, examples | 1-12 |
| A | US 2018/0282585 A1 (TESA SE) 04 October 2018, examples | 1-12 |

Form PCT/ISA/210 (continuation of second sheet) (January 2015)

**INTERNATIONAL SEARCH REPORT**
Information on patent family members

| International application No. |
| --- |
| PCT/JP2021/014216 |

| Patent Documents referred to in the Report | Publication Date | Patent Family | Publication Date |
| --- | --- | --- | --- |
| WO 2017/022822 A1 | 09.02.2017 | US 2018/0229339 A1 claims 1, 13-15, paragraphs [0155], [0156], examples, tables 23-25, fig. 2 EP 3333245 A1 SG 11201710736X A CN 107922867 A KR 10-2018-0037922 A BR 112018001381 A KR 10-2019-0008444 A TW 201711791 A RU 2673474 C | |
| WO 2016/174713 A1 | 03.11.2016 | CN 107530918 A | |
| JP 2017-127970 A | 27.07.2017 | US 2016/0045961 A1 examples US 2019/0061017 A1 WO 2014/157570 A1 EP 2979832 A1 TW 201446397 A CN 105073355 A KR 10-2015-0133210 A RU 2015145744 A SG 112015068930 A BR 112015021661 A | |
| JP 2015-232108 A | 24.12.2015 | US 2016/0340562 A1 examples WO 2015/119229 A1 EP 3106499 A1 CN 105980508 A KR 10-2016-0119779 A | |
| JP 2012-45795 A | 08.03.2012 | (Family: none) | |
| JP 2010-106193 A | 13.05.2010 | (Family: none) | |
| US 2018/0282585 A1 | 04.10.2018 | WO 2017/042218 A1 EP 3347425 A1 DE 102015217301 A CN 108026417 A | |

Form PCT/ISA/210 (patent family annex) (January 2015)

**EP 4 147 811 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012210689 A